(19) Europäisches Patentamt
European Patent Office
Office européen des brevets

(11) **EP 4 737 239 A1**

(12) **EUROPEAN PATENT APPLICATION**

(43) Date of publication:
06.05.2026 Bulletin 2026/19

(21) Application number: 24210143.4

(22) Date of filing: 31.10.2024

(51) International Patent Classification (IPC):
**B60W 10/02** (2006.01)     **B60W 10/04** (2006.01)
**B60W 10/16** (2012.01)     **B60W 30/02** (2012.01)
**B60W 30/045** (2012.01)

(52) Cooperative Patent Classification (CPC):
**B60W 10/02; B60W 10/04; B60W 10/16;
B60W 30/02; B60W 30/045;** B60W 2520/105;
B60W 2520/125; B60W 2520/14; B60W 2520/266;
B60W 2520/28; B60W 2530/20; B60W 2710/027;
B60W 2720/406

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Car Corporation
405 31 Göteborg (SE)**

(72) Inventors:
• **Shekhar, Rudrendu
SE-405 31 Göteborg (SE)**
• **Idegren, Martin
SE-405 31 Göteborg (SE)**
• **Sondhi, Eshwar
SE-405 31 Göteborg (SE)**

(74) Representative: **Nederlandsch Octrooibureau
P.O. Box 29720
2502 LS The Hague (NL)**

(54) **METHOD FOR DETERMINING AMOUNT OF OVERLOCKING IN A VEHICLE COMPRISING DUAL CLUTCHES**

(57)     A method for a vehicle is provided, wherein the vehicle comprising two clutches on an axle and arranged to transmit propulsion torque generated by a propulsion actuator to two wheels of the vehicle on the axle, the two clutches being connected to the propulsion actuator, the method comprising: determining first data indicative of a difference between a first speed at which one of the two wheels rotate and a second speed at which the other one of the two wheels rotate, wherein the first data is determined based on a track width and a yaw rate of the vehicle, determining second data indicative of a slip force based on the first data and a tire longitudinal stiffness of any of the two wheels, and determining third data indicative of a coupling torque based on the second data and a radius of any of the two wheels.

Fig. 6

EP 4 737 239 A1

## Description

## Technical Field

The current disclosure relates to a method and/or an apparatus for determining amount of overlocking needed to equalize the speed of both the wheels of an axle in a vehicle comprising dual clutches.

## Background Art

Torque vectoring dual clutch (TVDC) is a kind of transmission systems consisting of two individual clutches driven by a propulsion actuator like an electric motor or a combustion engine. Each clutch is connected to a wheel, and the torque generated by the propulsion actuator can be unequally distributed between the left and the right wheel.

## Summary

TVDC enables overlock, when the sum of the individual clutch capacities exceeds the torque from the propulsion actuator. When a vehicle is turning, the curve-inside wheel rotates slower than the curve-outside wheel. When the clutches are overlocked, the speed difference between the curve-inside and curve-outside wheels connected to the clutches is reduced, and thus forces between the tire and the road that resists the turn and dampens the yaw motion are generated.

This allows to improve the directional stability of a vehicle by overlock interventions. These overlock interventions can be very sensitive as these are nearly not perceivable by the driver, because it neither creates noise nor deceleration unlike the ESC interventions. Thus, the yaw motion of the vehicle is dampened early, before the ESC system can intervene, which stabilizes the vehicle in a smooth manner.

As said, the present disclosure relates to vehicles having two wheels on an axle which can rotate independently from one another and an actuator that can connect these two wheels together such that they rotate at the same speed. Some examples of such an arrangement can be an axle with a TVDC actuator. Each clutch is connected to a wheel and can rotate independently by allowing some slippage on the clutches. When the clutch capacity is increased such that there is no slippage on the clutches, the wheels rotate together at the same speed. Another example of such an arrangement can be a vehicle having an axle with an electronic limited slip differential (ELSD). Such a device has an open differential with a clutch arrangement which allows both wheels on the axle to rotate independently when the clutch is disconnected. When the clutch capacity is increased significantly, the wheels are mechanically connected and rotate at the same speed.

By connecting both wheels of an axle when needed, the directional stability of a vehicle in various situations can be improved. When a vehicle is going in a curve, the curve-inside wheels rotate slower than the curve-outside wheels. If the curve-inside and the curve-outside wheels are connected by the device, they are forced to rotate at the same speed. This generates forces in the tires that creates a yaw torque which opposes the turning of the vehicle and dampens the yaw motion.

For instance, when a vehicle is pushed to the grip limit, it may lead to a loss of directional stability of the vehicle. When this happens, the driver is no longer able to control the heading of the vehicle by steering, and this can lead to severe accidents. The problem gets exaggerated at higher vehicle speeds as this gives less time for the driver to react. Thus, there is a need to stabilize the vehicle when it approaches the grip limit. This can be achieved by applying a corrective yaw torque, which dampens the yaw motion of the vehicle. Traditionally this is done by the electronic stability control (ESC) system which applies brake torque on one or more wheels, which generates forces between the tire and the road, and creates that corrective yaw torque. Although very effective, the application of brake torque by the ESC system is always accompanied by a noise from the brake actuation unit, and a sudden deceleration proportional to the applied brake torque. Due to these reasons, the ESC system is not designed to be sensitive, otherwise it could unnecessarily intervene during sporty driving (like on a racetrack), which can be perceived as intrusive by the driver. As the ESC system is not very sensitive, in some situations, it leads to delayed interventions, which makes the vehicle difficult to control for the driver. On the other hand, a corrective yaw torque can be applied by an actuator like TVDC, by mechanically connecting two wheels on the same axle, to force the curve-inside and the curve-outside wheel to rotate at the same speed. Such an intervention can be very sensitive as these are nearly not perceivable by the driver, because it neither creates noise nor deceleration unlike the ESC interventions. Thus, the yaw motion of the vehicle is dampened very early, before the ESC system can intervene, which stabilizes the vehicle in a smooth manner.

To achieve an effective intervention by mechanically connecting the curve-inside and the curve-outside wheels, it is important to know how much coupling torque needs to be applied by the appropriate actuator (TVDC actuator) because when this happens, maximum amount of corrective yaw torque is generated using this technique.

In a first aspect of the disclosure, a method for a vehicle is provided, wherein the vehicle comprising two clutches on an axle and arranged to transmit propulsion torque generated by a propulsion actuator to two wheels of the vehicle on the axle, the two clutches being connected to the propulsion actuator, the method comprising: determining first data indicative of a difference between a first speed at which one of the two wheels rotate and a second speed at which the other one of the two wheels rotate, wherein the first data is determined based on a track width and a yaw rate of the vehicle, determining second data indicative of a slip force based on the first data and a tire longitudinal stiffness of any of the two wheels, and determining third data indicative of a coupling torque based on the second data and a radius of any of the two wheels.

The method may further comprise adjusting a torque request to the two clutches based on the third data, wherein the two clutches are arranged to transmit the propulsion torque generated by the propulsion actuator to the two wheels based on the torque request and based on the propulsion torque generated by the propulsion actuator.

This allows to calculate the amount of coupling torque that is needed to mechanically connect the curve-inside and the curve-outside wheels such that they rotate at the same speed.. When this happens, a yaw torque is generated which provides yaw damping and thus improves the directional stability of the vehicle. This corrective yaw torque can be applied as a sensitive intervention since it neither creates noise nor deceleration unlike the ESC intervention, which improves the premium feeling in the vehicle.

The first data may be determined as follows:

$$V_l - V_r = \left| \dot{\psi} \times T \right|$$

wherein $V_l$ is the first speed, $V_r$ is the second speed, $\dot{\psi}$ is the yaw rate and $T$ is the track width.

Determining the second data indicative of the slip force may further comprise determining a slip ratio corresponding to the difference between the first and the second speeds.

The slip ratio may be determined as follows:

$$SR = (V_l - V_r) \times \frac{2}{V_l + V_r}$$

wherein $SR$ is the slip ratio, $V_l$ is the first speed and $V_r$ is the second speed.

The second data may be determined as follows:

$$F_x^{SR} = f(SR)$$

wherein $F_x^{SR}$ is the slip force, $SR$ is the slip ratio and $f$ is a function of the slip ratio.

The method may further comprise:

- determining the first coupling torque $\mathrm{T}_c^{SR}$ as follows:

$$\mathrm{T}_c^{SR} = F_x^{SR} \times R$$

wherein $F_x^{SR}$ is the slip force and $R$ is the radius of any of the two wheels;

- determining a vertical force acting on one of the two wheels on the inner side of a curve on which the vehicle is turning based on a longitudinal and a lateral acceleration of the vehicle;

- determining a total force capacity of the one of the two wheels on the inner side of a curve on which the vehicle is turning based on the vertical force and a surface friction coefficient of a road being travelled by the vehicle;

- determining a lateral force acting on the one of the two wheels on the inner side of a curve on which the vehicle is turning based on the lateral acceleration of the vehicle;

- determining a longitudinal force capacity acting on the one of the two wheels on the inner side of a curve on which the vehicle is turning based on the lateral force and the total force capacity; and

- determining a second coupling torque based on the longitudinal force capacity, the radius of the one of the two wheels on the inner side of a curve on which the vehicle is turning and at least one of a propulsion torque and a brake torque being applied to the one of the two wheels on the inner side of a curve on which the vehicle is turning;

- wherein the coupling torque is equal to the first coupling torque if the second coupling torque is higher than the first coupling torque and wherein the coupling torque is equal to the second coupling torque if the first coupling torque is higher than the second coupling torque.

The total force capacity of the one of the two wheels on the inner side of a curve on which the vehicle is turning may be determined as follows:

$$F_{totcap}^i = \mu \times F_z^i$$

wherein $F_{totcap}^i$ is the total force capacity of the one of the two wheels on the inner side of a curve on which the vehicle is turning, $\mu$ is the surface friction coefficient of the road being travelled by the vehicle and $F_z^i$ is the vertical force acting on the one of the two wheels located inside a curve the vehicle.

The longitudinal force capacity may be determined as follows:

$$F_{xcap}^i = \sqrt{\left(F_{totcap}^i\right)^2 - \left(F_y^i\right)^2}$$

wherein $F_{xcap}^i$ is the longitudinal force capacity of the one of the two wheels on the inner side of a curve on which the vehicle is turning, $F_{totcap}^i$ is the total force capacity of the one of the two wheels on the inner side of a curve on which the vehicle is turning and $F_y^i$ is the lateral force acting on the one of the two on the inner side of a curve on which the vehicle is turning.

The second coupling torque may be determined as follows:

$$T_c^{lim} = F_{xcap}^i - \left(T_{prop}^i - T_{brk}^i\right) \times R_i$$

wherein $T_c^{lim}$ is the second coupling torque, $F_{xcap}^i$ is the longitudinal force capacity of the one of the two wheels on the inner side of a curve on which the vehicle is turning, $T_{prop}^i$ a propulsion torque being applied to the one of the two on the inner side of a curve on which the vehicle is turning, $T_{brk}^i$ is the brake torque being applied to the one of the two wheels on the inner side of a curve on which the vehicle is turning and $R_i$ is the radius of the one of the two wheels on the inner side of a curve on which the vehicle is turning.

The two clutches may be located on a front and/or on a rear axle of the vehicle.

Adjusting the torque request may comprise increasing the torque request to the two clutches by increasing an individual capacity of each of the two clutches to transmit torque to the wheels such that the sum of the individual capacities of the two clutches exceeds the propulsion torque generated by the propulsion actuator and the transmitted torque is less than the coupling torque. Each of the two clutches is connected to the propulsion actuator and to a corresponding wheel and comprises an individual capacity to transmit torque from the propulsion actuator to the corresponding wheel to which is connected. The individual capacity of each of the two clutches to transmit torque to the corresponding wheel can be adjusted based on the torque request.

According to another aspect of the disclosure, a control unit for a vehicle is provided, wherein the control unit is configured to perform the above-described method.

According to another aspect of the disclosure, a vehicle is provided, the vehicle comprising the above-described control unit, a propulsion actuator and two clutches connected to the propulsion actuator.

**Brief Description of Drawings**

Figure 1 illustrates a block diagram of a vehicle system according to the disclosure.

Figure 2 illustrates a flowchart schematically depicting a method according to the disclosure.

Figure 3 illustrates schematically a view of a vehicle according to an embodiment of the disclosure.

Figure 4 schematically illustrates forces acting on a wheel.

Figure 5 schematically illustrates the axis system of a vehicle.

Figure 6 schematically illustrates turning geometry of a vehicle and forces generated when both wheels of an axle are mechanically coupled.

**Description of Embodiments**

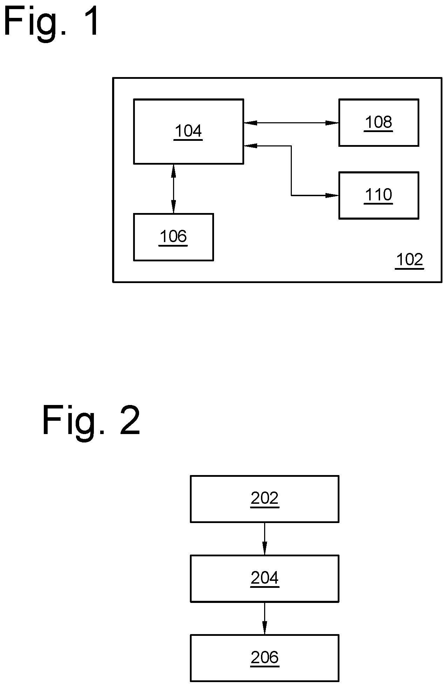

Figure 1 illustrates a block diagram of a vehicle system 102 according to the disclosure. The operating or vehicle system 102 may comprise a control unit 104, a memory 106, a sensor unit 108, and a communication unit 110. The control unit 104 is connected to the memory 106, the sensor unit 108, and the communication unit 110. The communication unit 110 may transmit and receive information via Bluetooth, through a wireless communication network, for example, a 4G network, and/or using any other suitable communication technology.

Figure 2 illustrates a flowchart schematically depicting a method for a vehicle comprising two clutches connected to wheels of the vehicle and arranged to transmit torque to the wheels of the vehicle, the two clutches being connected to a propulsion actuator. The method of Figure 2 may be performed by the control unit 104 of Figure 1.

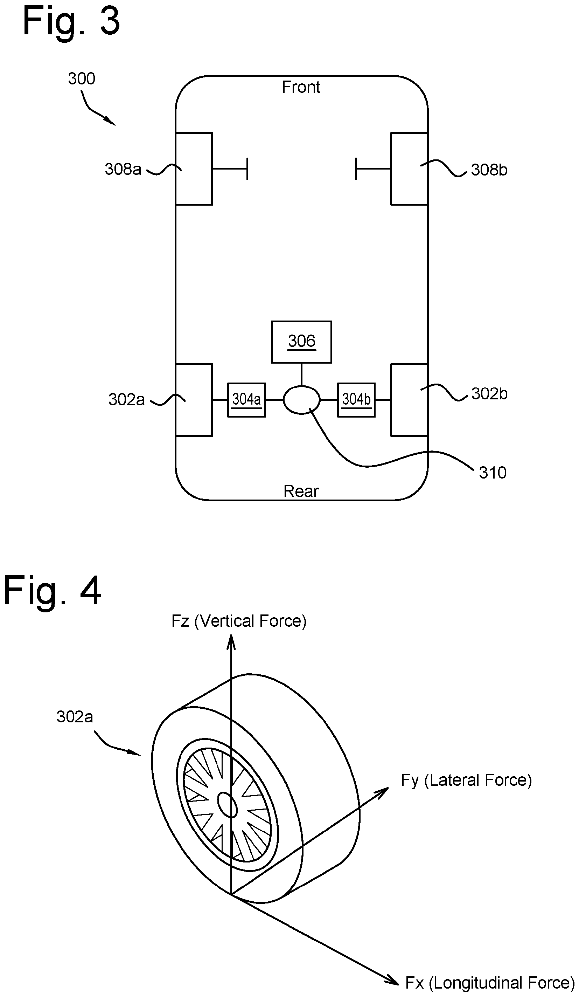

Figure 3 illustrates a view of a vehicle 300 comprising the vehicle system of Figure 1 (not shown) comprising four wheels 308a, 308b, 302a and 302b. The vehicle 300 comprises further two clutches 304a and 304b respectively connected to the rear wheels 302a and 302b and to a propulsion actuator 306. The two clutches 304 comprise a first clutch 304a and a second clutch 304 b and are configured to transmit torque to the rear wheels 302 based on a torque request generated by the control unit 104 and a propulsion torque generated by the propulsion actuator 306.

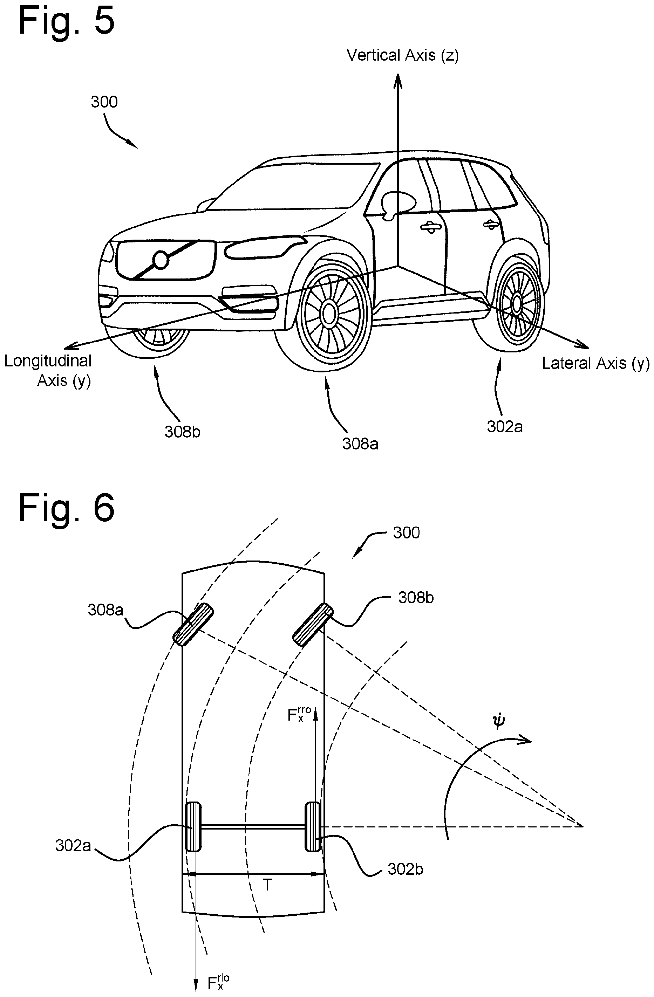

Figure 4 schematically illustrates forces acting on a wheel 302a. Figure 5 schematically illustrates the axis system of a vehicle 300. Figure 6 schematically illustrates turning geometry of the vehicle 300 and forces generated when both wheels of an axle are mechanically coupled.

Although the disclosure will be explained in relation of a vehicle 300 comprising two clutches 304a and 304b respectively connected to the rear wheels 302a and 302b and to a propulsion actuator 306, this is a non-limiting example and the disclosure also applies to a vehicle having two extra clutches and an extra propulsion actuator wherein the two extra clutches are respectively connected to the front wheels 308a and 308b and to the extra propulsion actuator. In the same way, the disclosure also applies to a vehicle wherein the two clutches 304a and 304b are respectively connected to the front wheels 308a and 308b, instead of to the rear wheels.

The two clutches 304 may be mechanical or hydraulic clutches or any other kind of clutches. If the clutches 304 are hydraulic ones, the pressure of the clutches may be increased or decreased based on the adjusted torque request. If the pressure is increased, the clutches 304 capacity to transmit torque to the rear wheels 302 will also be increased such that the sum of the capacity to transmit torque of the first clutch 304a and the capacity to transmit torque of the second clutch 304b is more than the propulsion torque generated by the propulsion actuator 306. If the clutches are mechanical, any other method to modify the capacity of transmitting torque to the rear wheels may be used.

As said, the method of Figure 2 may be performed by the control unit 104 of Figure 1 which may be arranged at the vehicle 300 of Figure 3.

In step 202, the method of Figure 2 comprises determining first data indicative of a difference between a first speed $V_l$ at which one of the two wheels 302a rotate and a second speed $V_r$ at which the other one of the two wheels 302b rotate, wherein the first data is determined based on a track width T between the two wheels 302 and a yaw rate $\dot{\psi}$ of the vehicle 300. The first data is received by the processing unit 104 of the vehicle system 102.

The method of Figure 2 proceeds after step 202 to step 204, wherein second data indicative of a slip force $F_x^{SR}$ is determined based on the first data and a tire longitudinal stiffness of any of the two wheels 302.

Finally, the method of Figure 2 goes step 206 to determine third data indicative of a coupling torque based on the second data and a radius R of any of the two wheels 302.

The method of Figure 2 may comprise a further step of adjusting a torque request to the two clutches 304 based on the third data.

This technique can be used to generate an opposing yaw torque using an appropriate actuator (like TVDC which has the possibility to mechanically connect the curve-inside and the curve-outside wheels whenever needed) to dampen the yaw motion and improve directional stability of a vehicle.

As said, the method of Figure 2 allows to calculate how much coupling torque needs to be applied (by the coupling actuator like TVDC) such that the curve-inside and the curve-outside wheels rotate at the same speed.

In some embodiments, adjusting the torque request may comprise increasing the torque request to the two clutches 304.

In a further embodiment, increasing the torque request may comprise increasing an individual capacity of each of the two clutches 304 to transmit torque to the wheels such that the sum of the individual capacities of the two clutches 304 exceeds the propulsion torque generated by the propulsion actuator 306.

The method of Figure 2 allows to overlock the two clutches 304 on the axle when the vehicle 300 is in an instability situation or any other situation that may require it. Overlocking the two clutches 304 increases the torque capacity of the first clutch 304a and of the second clutch 304b equally, such that the sum of the individual clutch torque capacities of each of the two clutches 304 exceeds the propulsion torque generated by the propulsion actuator 306 on the rear axle. The result is that the curve outside 302a and the curve inside wheel 302b are more rigidly connected, which forces them to rotate at the same speed.

The amount of overlock may be limited to a value which is needed to have equal speed on the curve-inside and curve-outside wheels, since after that value, additional overlock does not impact the yaw behavior of the vehicle.

Considering Figure 3, the propulsion actuator 306 generates a propulsion torque based on the propulsion torque request from the driver (the term driver through the description covers both human drivers or autonomous driven vehicles). The propulsion torque generated by the propulsion actuator 306 will be transmitted to the rear wheels 302 through the two clutches 304. To do that, a torque request indicating an instantaneous torque capacity request to each clutch will be sent.

The present disclosure proposes that in certain situations the instantaneous torque capacity request to the individual clutches 304 is increased such that the clutches are overlooked (i.e. sum of the instantaneous torque capacity request to each clutch 304 is more than the torque generated by the propulsion actuator 306). The propulsion torque request to the propulsion actuator 306 can be generated using accelerator pedal inputs (in case of a human driver).

Fig. 6 shows a vehicle 300 driving in a curve. When the wheels 308 and 302 are allowed to rotate freely, the curve-inside wheels 302b and 308b rotate slower than the curve outside wheels 302a and 308a due to the geometry of the turn as shown in Figure 6. When the corresponding curve-inside and curve-outside wheels are rigidly connected, then they are forced to rotate at the same speed, which generates forces in the tires that oppose the turn. For example, if the two back wheels 302a and 302b are rigidly connected, they would generate forces $F_x^{rlo}$ and $F_x^{rro}$ respectively that would create a yaw torque that resists the turn. In this way, the vehicle of Figure 6 may comprise the two clutches 304 shown in Figure 3 and arranged to transmit the propulsion torque generated by the propulsion actuator 306 to the two wheels 302 based on the torque request and based on the propulsion torque generated by the propulsion actuator 306.

As the difference in wheel speed between the curve-inside 302b and the curve-outside wheel 302a needs to be eliminated, a longitudinal slip, equal in magnitude to this difference, needs to be generated. To generate this longitudinal slip, a force needs to be applied to the tire, which can be calculated by using the longitudinal slip needed, and an appropriate mathematical model of the tire. This force needs to be generated by the coupling actuator (like TVDC) in the example shown in the Figures, by applying a coupling torque, which is proportional to the force and a rolling radius R of the wheels 302.

In this way, the first data indicative of a difference between a first speed $V_l$ at which one of the two wheels 302a rotate and a second speed $V_r$ at which the other one of the two wheels 302b rotate in step 202 may be determined as $V_l - V_r = |\dot{\psi} \times T|$, wherein T is the track width between the two wheels 302 and $\dot{\psi}$ the yaw rate of the vehicle 300.

Determining the second data indicative of the slip force in step 204 may further comprise determining a slip ratio SR corresponding to the difference between the first and the second speeds $V_l$ and $V_r$.

Furthermore, the slip ratio SR in step 204 may be determined as $SR = (V_l - V_r) \times \frac{2}{V_l + V_r}$.

In another embodiment, the second data indicating the slip force $F_x^{SR}$ in step 204 may be determined based on $F_x^{SR} = f(SR)$ wherein $f$ is a function of the slip ratio SR. For instance, the slip force $F_x^{SR}$ can be calculated using a linear model of the tire having a longitudinal stiffness $C_x$ such that $F_x^{SR} = SR \times C_x$. Other examples of a function $f$ that can be used are different types of tire models like a linear tire model (as mentioned in the example), a brush tire model, a magic formula tire mode, a dugoff tire model etc.

In a further embodiment, the method of Figure 2 may comprise determining a first coupling torque $T_c^{SR}$ as

$$T_c^{SR} = F_x^{SR} \times R.$$

The method of Figure 2 may comprise limiting the first coupling torque if the curve-inside wheel 302b is not able to tolerate the induced longitudinal force (the slip force $F_x^{SR}$). When a vehicle is cornering, the curve-outside wheels have more vertical force as compared to the curve-inside wheels due to lateral load transfer. The amount of lateral and longitudinal force a tire can generate depends on the vertical force on the tire. The reduction of vertical force on the curve-inside wheel reduces its lateral and longitudinal force capacity. During cornering, a significant amount of lateral force is generated by the curve-inside wheel which further reduces its capacity to generate longitudinal forces. The capacity of the curve-inside wheel to generate longitudinal force may be calculated using the vertical force, surface friction, net propulsive or brake torque and the lateral force generated by the tire. If this amount of longitudinal force (corresponding to the calculated capacity) is generated by the coupling actuator by applying a coupling torque, it would saturate the curve-inside wheel 302b, and it would start rotating at the same speed as the curve-outside wheel 302a.

The vertical force on the wheels 302 can be estimated using the longitudinal and lateral acceleration and an appropriate load transfer model of the vehicle 300.

For the curve-inside wheel 302b, the vertical force $F_z^i$ and an estimate of the surface friction coefficient $\mu$ of a road being travelled by the vehicle 300 can be used to calculate the total (longitudinal + lateral) force capacity $F_{totcap}^i$ of the curve-inside wheel 302a. This is the maximum total force the curve-inside wheel 302a can generate. For instance, the total force capacity $F_{totcap}^i$ of wheel 302a may be determined as $F_{totcap}^i = \mu \times F_z^i$.

In this way and as explained, the method of Figure 2 may comprise determining a vertical force $F_z^i$ acting on wheel 302b based on a longitudinal and a lateral acceleration $a_x$ and $a_y$ of the vehicle 300, determining a total force capacity $F_{totcap}^i$ of wheel 302b based on the vertical force $F_z^i$ and a surface friction coefficient $\mu$ of a road being travelled by the vehicle 300.

When the vehicle 300 is turning, lateral forces are generated in the tires, and an estimate of the lateral force $F_y^i$ generated in the curve-inside wheel 302b can be calculated using the lateral acceleration $a_y$ of the vehicle 300 and appropriate mathematical models. The longitudinal force capacity $F_{xcap}^i$ of the curve-inside wheel 302b can be calculated from the total force capacity and the lateral force $F_y^i$ using appropriate tire models. For example, a friction-circle based tire model can be used as below such that the longitudinal force capacity $F_{xcap}^i$ may be determined as:

$$F_{xcap}^i = \sqrt{\left(F_{totcap}^i\right)^2 - \left(F_y^i\right)^2}$$

In this way, the method of Figure 2 may comprise determining a lateral force $F_y^i$ acting on wheel 302b based on the lateral acceleration $a_y$ of the vehicle 300, and determining a longitudinal force capacity $F_{xcap}^i$ acting on wheel 302b based on the lateral force $F_y^i$ and the total force capacity $F_{totcap}^i$.

In the presence of propulsion $T_{prop}^i$ and brake torque $T_{brk}^i$ on the curve-inside wheel 302b, a part of the longitudinal force capacity is utilized. The remaining longitudinal force capacity for the curve-inside wheel $F_{xlim}^i$,

is the force that needed to be generated by the coupling actuator to saturate the curve-inside wheel, so that it rotates at the same speed as the curve-outside wheel.

Furthermore, the method of Figure 2 may comprise determining a second coupling torque $T_c^{lim}$ based on the longitudinal force capacity $F_{xcap}^i$, the radius R of the wheel 302b and at least one of a propulsion torque and a brake torque being applied to wheel 302b.

The second coupling torque $T_c^{lim}$ may be determined as $T_c^{lim} = F_{xcap}^i - \left(T_{prop}^i - T_{brk}^i\right) \times R$ wherein $T_{prop}^i$ is a propulsion torque being applied to the wheel 302a located inside the curve and $T_{brk}^i$ is the brake torque being applied to wheel 302a.

The method of Figure 2 may furthermore arbitrate between the first and second coupling torques such that a minimum of the first and second coupling torques is taken. This is because applying a minimum of these two coupling torques would ensure that the curve-inside and the curve outside wheels have the same speed, and thus an increase in coupling torque would not increase the longitudinal force, and hence the corrective yaw torque. Thus, the coupling torque needed to equalize the speed of the curve-inside and the curve-outside wheel can be given by:

$$T_c = \min(T_c^{SR}, T_c^{lim})$$

In this way, step 206 of Figure 2 may comprise determining the coupling torque as being equal to the first coupling torque $T_c^{SR}$ if the second coupling torque $T_c^{lim}$ is higher than the first coupling torque $T_c^{SR}$ and wherein the coupling torque is equal to the second coupling torque $T_c^{lim}$ if the first coupling torque $T_c^{SR}$ is higher than the second coupling torque $T_c^{lim}$.

The lateral acceleration of the vehicle 300, the yaw rate of the vehicle 300 and/or the rotational speed of any of the wheels 308 of the vehicle 300 may be received from the sensor unit 108. The sensor unit 108 may comprise an inertial measurement unit (IMU) comprising accelerometers and gyroscopes. The accelerometers may measure the lateral acceleration of the vehicle 300 and the gyroscopes may measure the yaw rate of the vehicle 300. Furthermore, the sensor unit 108 may comprise wheel speed sensor to measure the rotational speed of the wheels 308. For instance, the sensor unit may comprise four-wheel speed sensors, one for each wheel 308 of the vehicle 300. The sensor unit 108 may further comprise driver input sensors (DIS) such as a steering angle sensor to detect a steering angle of a steering wheel of the vehicle 300, a brake pedal sensor to detect a brake pedal position and/or an accelerator pedal sensor to detect an accelerator pedal position.

However, the sensor unit 108 may comprise any other kind of sensors allowing to obtain the data needed.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims.

**Claims**

1. A method for a vehicle (300) comprising two clutches (304) on an axle and arranged to transmit propulsion torque generated by a propulsion actuator (306) to two wheels of the vehicle on the axle, the two clutches being connected to the propulsion actuator (306), the method comprising:

    determining (202) first data indicative of a difference between a first speed at which one of the two wheels rotate and a second speed at which the other one of the two wheels rotate, wherein the first data is determined based on a track width and a yaw rate of the vehicle; determining (204) second data indicative of a slip force based on the first data and a tire longitudinal stiffness of any of the two wheels; and determining (206) third data indicative of a coupling torque based on the second data and a radius of any of the two wheels.

2. The method according to claim 1, further comprising adjusting a torque request to the two clutches based on the third data, wherein the two clutches are arranged to transmit the propulsion torque generated by the propulsion actuator to the two wheels based on the torque request and based on the propulsion torque generated by the propulsion actuator.

3. The method according to any of the previous claims, wherein the first data is determined as follows:

$$V_l - V_r = |\dot{\psi} \times T|$$

wherein $V_l$ is the first speed, $V_r$ is the second speed, $\dot{\psi}$ is the yaw rate and $T$ is the track width.

4. The method according to any of the previous claims, wherein determining the second data indicative of the slip force further comprises determining a slip ratio corresponding to the difference between the first and the second speeds.

5. The method of claim 4, wherein the slip ratio is determined as follows:

$$SR = (V_l - V_r) \times 2/(V_l + V_r)$$

wherein $SR$ is the slip ratio, $V_l$ is the first speed and $V_r$ is the second speed.

6. The method according to any of claims 4 and 5, wherein the second data is determined as follows:

$$F_x^{SR} = f(SR)$$

wherein $F_x^{SR}$ is the slip force, $SR$ is the slip ratio and $f$ is a function of the slip ratio.

7. The method according to any of the previous claims further comprising:

    determining a first coupling torque $T_c^{SR}$ as follows:

$$T_c^{SR} = F_x^{SR} \times R$$

$F_x^{SR}$ is the slip force and R is the radius of any of the two wheels;

determining a vertical force ($F_z^i$) acting on one of the two wheels located on the inner side of a curve on which the vehicle is turning based on a longitudinal and a lateral acceleration of the vehicle;

determining a total force capacity ($F_{totcap.}^i$) of the one of the two wheels on the inner side of a curve on which the vehicle is turning based on the vertical force ($F_z^i$) and a surface friction coefficient ($\mu$) of a road being travelled by the vehicle;

determining a lateral force ($F_y^i$) acting on the one of the two wheels on the inner side of a curve on which the vehicle is turning based on the lateral acceleration ($a_y$) of the vehicle; determining a longitudinal force capacity ($F_{xcap.}^i$) of the one of the two wheels on the inner side of a curve on which the vehicle is turning based on the lateral force ($F_y^i$) and the total force capacity ($F_{totcap}^i$); and

determining a second coupling torque ($T_c^{lim}$) based on the longitudinal force capacity ($F_{xcap}^i$), the radius of the one of the two wheels on the inner side of a curve on which the vehicle is turning and at least one of a propulsion torque and a brake torque being applied to the one of the two wheels on the inner side of a curve on which the vehicle is turning; wherein the coupling torque is equal to the first coupling torque if the second coupling torque is higher than the first coupling torque and wherein the coupling torque is equal to the second coupling torque if the first coupling torque is higher than the second coupling torque.

8. The method according to claim 7, wherein total force capacity ($F_{totcap}^i$) of the one of the two wheels on the inner side of a curve on which the vehicle is turning is determined as follows:

$$F_{totcap}^i = \mu \times F_z^i$$

wherein $F_{totcap}^i$ is the total force capacity of the one of the two wheels on the inner side of a curve on which the vehicle is turning, $\mu$ is the surface friction coefficient of the road being travelled by the vehicle and $F_z^i$ is the vertical force acting on the one of the two wheels on the inner side of a curve on which the vehicle is turning.

9. The method according to any of claims 7 and 8, wherein the longitudinal force capacity is determined as follows:

$$F_{xcap}^i = \sqrt{\left(F_{totcap}^i\right)^2 - \left(F_y^i\right)^2}$$

wherein $F_{xcap}^i$ is the longitudinal force capacity of the one of the two wheels on the inner side of a curve on which the vehicle is turning $F_{totcap}^i$ is the total force capacity of the one of the two wheels on the inner side of a curve on which the vehicle is turning and $F_y^i$ is the lateral force acting on the one of the two wheels on the inner side of a curve on which the vehicle is turning.

10. The method according to any of claims 7-9, wherein the second coupling torque is determined as follows:

$$T_c^{lim} = F_{xcap}^i - (T_{prop}^i - T_{brk}^i) \times R_i$$

wherein $T_c^{lim}$ is the second coupling torque, $F_{xcap}^i$ is the longitudinal force capacity of the one of the two wheels on the inner side of a curve on which the vehicle is turning, $T_{prop}^i$ a propulsion torque being applied to the one of the two wheels on the inner side of a curve on which the vehicle is turning, $T_{brk}^i$ is the brake torque being applied to the one of the two wheels on the inner side of a curve on which the vehicle is turning and $R_i$ is the radius of the one of the two wheels on the inner side of a curve on which the vehicle is turning.

11. The method of any of the previous claims, wherein the two clutches are located on a front and/or on a rear axle of the vehicle.

12. The method according any of claims 2-11, wherein adjusting the torque request comprises increasing the torque request to the two clutches by increasing an individual capacity of each of the two clutches to transmit torque to the wheels such that the sum of the individual capacities of the two clutches exceeds the propulsion torque generated by the propulsion actuator and the transmitted torque is equal or less than the coupling torque.

13. A control unit for a vehicle (300) configured to perform the method of previous claims.

14. A vehicle (300) comprising the control unit according to claim 13, a propulsion actuator and two clutches connected to the propulsion actuator.

# Fig. 1

# Fig. 2

# Fig. 3

# Fig. 4

# Fig. 5

Vertical Axis (z)

300

Longitudinal
Axis (y)

Lateral Axis (y)

308b

308a

302a

# Fig. 6

300

308b

308a

$F_x^{rro}$

$\psi$

302a

302b

T

$F_x^{rlo}$

EP 4 737 239 A1

Europäisches Patentamt
European Patent Office
Office européen des brevets

# EUROPEAN SEARCH REPORT

Application Number

EP 24 21 0143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/313873 A1 (HAJILOO REZA [CA] ET AL) 5 October 2023 (2023-10-05) | 1-6,11, 13,14 | INV. B60W10/02 |
| Y | * figures 1-5 *<br>* paragraphs [0015] - [0016], [0020], [0048] - [0063] *<br>* the whole document * | 7-10,12 | B60W10/04<br>B60W10/16<br>B60W30/02<br>B60W30/045 |
| Y | US 2008/264709 A1 (FENKER OLIVER [DE] ET AL) 30 October 2008 (2008-10-30)<br>* figures 1-7,15 *<br>* the whole document * | 7-10 | |
| Y | US 2021/261115 A1 (NIESSEN HARWIN [DE] ET AL) 26 August 2021 (2021-08-26)<br>* figures 1-2 *<br>* paragraphs [0018], [0022], [0025] - [0026] *<br>* the whole document * | 12 | |
| A | Jacobson Bengt: "Vehicle Dynamics Compendium",<br>,<br>1 January 2019 (2019-01-01), XP093013382,<br>Retrieved from the Internet:<br>URL:https://research.chalmers.se/publication/513850/file/513850_Fulltext.pdf<br>[retrieved on 2023-01-12]<br>* the whole document * | 3-6 | TECHNICAL FIELDS SEARCHED (IPC)<br><br>B60W |

The present search report has been drawn up for all claims

| Place of search | Date of completion of the search | Examiner |
|---|---|---|
| Munich | 5 May 2025 | Dubreuil, Cédric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 24 21 0143

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | | | Publication date | Patent family member(s) | | Publication date |
|---|---|---|---|---|---|---|
| US 2023313873 | A1 | | 05-10-2023 | CN 116923433 A | | 24-10-2023 |
| | | | | DE 102022127563 A1 | | 05-10-2023 |
| | | | | US 2023313873 A1 | | 05-10-2023 |
| US 2008264709 | A1 | | 30-10-2008 | AU 2008201663 A1 | | 30-10-2008 |
| | | | | CA 2628658 A1 | | 16-10-2008 |
| | | | | CL 2008001081 A1 | | 14-11-2008 |
| | | | | DE 102007017821 A1 | | 23-10-2008 |
| | | | | EP 1982886 A2 | | 22-10-2008 |
| | | | | US 2008264709 A1 | | 30-10-2008 |
| | | | | ZA 200803373 B | | 28-01-2009 |
| US 2021261115 | A1 | | 26-08-2021 | CN 112334353 A | | 05-02-2021 |
| | | | | DE 112018007801 A5 | | 01-04-2021 |
| | | | | JP 2021529697 A | | 04-11-2021 |
| | | | | US 2021261115 A1 | | 26-08-2021 |
| | | | | WO 2020007473 A1 | | 09-01-2020 |

EPO FORM P0459

For more details about this annex : see Official Journal of the European Patent Office, No. 12/82